Europäisches Patentamt

European Patent Office

Office européen des brevets

(19)

(11) Veröffentlichungsnummer: **0 397 662 B1**

# (12) EUROPÄISCHE PATENTSCHRIFT

(45) Veröffentlichungstag der Patentschrift:
**18.12.91 Patentblatt 91/51**

(51) Int. Cl.$^5$: **C08J 11/06, C22B 7/02, C08K 3/22**

(21) Anmeldenummer: **88910025.1**

(22) Anmeldetag: **18.11.88**

(86) Internationale Anmeldenummer:
**PCT/EP88/01045**

(87) Internationale Veröffentlichungsnummer:
**WO 89/06668 27.07.89 Gazette 89/16**

(54) **VERFAHREN ZUM AUFBEREITEN KOLLOIDER LACKSCHLAMMLÖSUNGEN.**

(30) Priorität: **22.01.88 DE 3801821**

(43) Veröffentlichungstag der Anmeldung:
**22.11.90 Patentblatt 90/47**

(45) Bekanntmachung des Hinweises auf die
Patenterteilung:
**18.12.91 Patentblatt 91/51**

(84) Benannte Vertragsstaaten:
**AT BE CH DE FR GB IT LI SE**

(56) Entgegenhaltungen:
**DE-A- 3 545 988**
**DE-C- 3 516 965**
**US-A- 4 759 855**

(73) Patentinhaber: **AUDI AG**
**Auto-Union-Strasse 1 Postfach 220**
**W-8070 Ingolstadt (DE)**

(72) Erfinder: **SCHULZ, Norbert**
**Gneisenaustr. 15**
**W-8070 Ingolstadt (DE)**
Erfinder: **KRÜGER, Bernd**
**Piusstr. 15**
**W-8071 Gro mehring (DE)**

(74) Vertreter: **Engelhardt, Harald**
**Audi AG Postfach 2 20**
**W-8070 Ingolstadt (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Aufbereiten kolloider Lackschlammlösungen bzw. Lack-Overspray aus der Kraftfahrzeug-Lackierung nach dem Oberbegriff des Anspruchs 1.

Ein derartiges Verfahren ist bereits aus der DE-C-3516965 bekannt. Dieses Verfahren ist insoweit vorteilhaft, als daß es einen bei der Metallbehandlung anfallenden Phosphatschlamm entsorgt, so daß auf den Erwerb eines im Handel erhältlichen Koagulierungsmittels verzichtet werden kann. Allerdings werden nach dieser vorbekannten Lehre Flockungsmittel eingesetzt.

Seit Jahrzehnten bestand bei der Entsorgung von bei der Aufbereitung von Schrott und der Stahlherstellung anfallenden Metalloxidstaubes eine ähnliche Problematik. Auch hier wurde mit wenig Rücksicht auf die Umwelt eine Lagerung in Sondermülldeponien in Kauf genommen.

Der vorliegenden Erfindung liegt die Aufgabe zugrunde, hier Abhilfe zu schaffen und ein Verfahren vorzusehen, das nicht nur umweltfreundlich, sondern auch wirtschaftlich arbeitet.

Diese Aufgabe wird durch das im Anspruch 1 gekennzeichnete Verfahren gelöst.

Erfindungsgemäß wird also der zu entsorgende Metalloxidstaub unabhängig von der Art und der gewichtsmäßigen Verteilung seiner Metalloxide, nicht mehr auf Sondermülldeponien verfrachtet, sondern einem neuen Verwendungszweck als Koagulierungs- und Entklebungsmittel für kolloidale Lackschlammlösungen bzw. Lack-Overspray aus der Kraftfahrzeug-Lackierung zugeführt. In verfahrensgemäßer Hinsicht bedarf es hierzu des Zusatzes einer geringen Menge an $P_2O_5$ und Tensid, während auf die gemäß der DE-C-3516965 erforderlichen Flockungsmittel überraschenderweise verzichtet werden kann.

Darüberhinaus hat sich herausgestellt, daß eine separate Alkalisierung durch Natronlauge nicht erforderlich ist.

Der pH-Wert kann je nach $CO_2$-Gehalt des Wassers in einem ziemlich breiten Rahmen eingestellt werden. Lediglich vorteilhafterweise wird ein pH-Wert von 8,5 eingestellt.

Weitere Vorteile und Mengenangaben sind den weiteren Unteransprüchen entnehmbar.

Im folgenden wird das erfindungsgemäße Verfahren anhand eines Ausführungsbeispiels beschrieben.

Insbesondere kann der erfindungsgemäß eingesetzte Metalloxidstaub folgende Zusammensetzung aufweisen:

85 Gew% ZnO

8 Gew% $Al_2O_3$

und

7 Gew% $Fe_2O_3$.

Auch ist daran gedacht, 2 GewTeile $P_2O_5$ und 0,2 GewTeile Tensid, bezogen auf 100 GewTeile Metalloxidstaub, zuzusetzen. Vorteilhaft ist dabei ein basischer pH-Wert von 8,5. Auch kann der anfallende Metalloxidstaub zunächst durch Zugabe flüssigen Äthylen-Propylen-Oxids in eine flüssige Phase überführt und danach $P_2O_5$ zugegeben werden. In der Autoindustrie wird eine Lackierung auf der Karosserie aufgebracht, wobei Farbnebel-Nassabscheider für Lackspritzkabinen vorgesehen werden, in denen ein sog. "Overspray" anfällt, der mit Wasser und Lösungsmittel von einer Wand abgewaschen wird. Das anfallende Kolloidsystem wird mit etwa der gleichen Menge an Metalloxidstaub versetzt, dem bezogen auf 100 Gew.Teile Metalloxidstaub, 0,2 GewTeile Äthylenpropylenoxid und 2 GewTeile $P_2O_5$ beigefügt sind. Durch Koagulierung und Entklebung werden die Kunstharzpartikel bzw. Lackiermaterialien in größere Agglomerate umgewandelt, die leicht entfernt werden können.

Die bisher im breiteren Stand der Technik auftretende Anlagenkorrosion wird durch die erfindungsgemäße Verfahrensweise vermieden. Darüberhinaus entfällt die Entsorgung des Metalloxidstaubs auf Sondermülldeponien und ermöglicht einen neuen wirtschaftlichen Einsatzbereich hierfür.

## Patentansprüche

1. Verfahren zum Aufbereiten kolloider Lackschlammlösungen bzw. Lack-Overspray aus der Kraftfahrzeug-Lackierung, wobei zur Reduzierung der Oberflächenspannung nichtionogene Tenside zugesetzt werden, dadurch gekennzeichnet, daß man als Koagulierungsmittel einen bei der Aufbereitung von Schrott und/oder der Stahlherstellung anfallenden Metalloxidstaub zusammen mit einer geringen Menge an Phosphorpentoxid unter Verzicht auf Flockungsmittel einsetzt, und daß das anfallende Kolloidsystem mit etwa der gleichen Menge an Metalloxidstaub, der 2 GewTeile $P_2O_5$ und 0,2 GewTeile Tensid auf 100 GewTeile Metalloxidstaub enthält, versetzt wird.

2. Verfahren nach Anspruch 1, dadurch gekennzeichnet, daß der Metalloxidstaub folgende Zusammensetzung aufweist:

85 Gew% ZnO

8 Gew% $Al_2O_3$

7 Gew% $Fe_2O_3$.

3. Verfahren nach Anspruch 1 und 2, dadurch gekennzeichnet, daß man einen basischen pH-Wert von 8,5 einstellt.

4. Verfahren nach Anspruch 1 bis 3, dadurch gekennzeichnet, daß der anfallende Metalloxidstaub zunächst durch Zugabe flüssigen Ethylenpropylenoxids als Tensid in eine flüssige Phase überführt und danach $P_2O_5$ zugegeben wird.

## Claims

1. Process for the preparation of colloidal lacquer sludge solutions, or lacquer overspray, from motor vehicle painting, non-ionogenic surface active agents being added to reduce the surface tension, characterised in that a metal oxide powder produced in the course of the preparation of scrap and/or the manufacture of steel is used as coagulant together with a small quantity of phosphorus pentoxide, flocculating agents being dispensed with, and that the colloid system produced is mixed with approximately the same quantity of metal oxide powder, the latter containing 2 parts by weight of $P_2O_5$ and 0.2 parts by weight of surface active agent to 100 parts by weight of metal oxide powder.

2. Process according to claim 1, characterised in that the metal oxide powder has the following composition :

85 % by weight ZnO

8 % by weight $Al_2O_3$

7 % by weight $Fe_2O_3$.

3. Process according to claims 1 and 2, characterised in that a basic pH value of 8.5 is set.

4. Process according to claims 1 to 3, characterised in that the metal oxide powder produced is in the first instance converted to a liquid phase by addition of liquid ethylene propylene oxide as surface active agent, and $P_2O_5$ is added thereafter.

## Revendications

1. Procédé de traitement de solutions colloïdales de boues de peinture-émail ou d'"overspray de peinture-émail" provenant de la peinture de véhicules automobiles, des tensides non ionogènes étant ajoutés afin de réduire la tension superficielle, caractérisé en ce qu'on utilise, comme agent de coagulation, une poussière d'oxydes métalliques provenant du traitement de ferrailles et/ou de la fabrication de l'acier, en combinaison avec une petite quantité d'anhydride phosphorique, en se passant de floculant, et en ce que le système colloïdal formé est mélangé avec à peu près la même quantité de poussière d'oxydes métalliques qui contient 2 parties en poids de $P_2O_5$ et 0,2 partie en poids de tenside pour 100 parties en poids de poussière d'oxydes métalliques.

2. Procédé selon la revendication 1, caractérisé en ce que la poussière d'oxydes métalliques présente la composition suivante:

85% en poids de ZnO

8% en poids d'$Al_2O_3$

7% en poids de $Fe_2O_3$.

3. Procédé selon la revendication 1 ou 2, caractérisé en ce qu'on règle une valeur basique du pH de 8,5.

4. Procédé selon l'une quelconque des revendications 1 à 3, caractérisé en ce que la poussière d'oxydes métalliques produite est d'abord transformée en une phase liquide par addition d'oxyde d'éthylène-propylène liquide en tant que tenside, puis est additionnée de $P_2O_5$.